(19) Europäisches Patentamt European Patent Office Office européen des brevets

(11) **EP 3 793 328 B1**

(12) **EUROPEAN PATENT SPECIFICATION**

(45) Date of publication and mention of the grant of the patent:
**25.03.2026 Bulletin 2026/13**

(21) Application number: **20189835.0**

(22) Date of filing: **06.08.2020**

(51) International Patent Classification (IPC):
***H05B 45/37*** (2020.01)

(52) Cooperative Patent Classification (CPC):
**H05B 45/37;** Y02B 20/30

(54) **LED QUICK ACTIVATION SYSTEM**

LED-SCHNELLAKTIVIERUNGSSYSTEM

SYSTÈME D'ACTIVATION RAPIDE À DEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2019 CN 201910735927**

(43) Date of publication of application:
**17.03.2021 Bulletin 2021/11**

(73) Proprietor: **Xiamen Leedarson Lighting Co., Ltd.**
**Xiamen, Fujian 361010 (CN)**

(72) Inventors:
• **Yang, Shih-Hsueh**
**Xiamen, Fujian (CN)**
• **Lin, Yi-Hsiung**
**Xiamen, Fujian (CN)**

(74) Representative: **Petraz, Gilberto Luigi et al**
**GLP S.r.l.**
**Viale Europa Unita, 171**
**33100 Udine (IT)**

(56) References cited:
WO-A1-2016/041122    CN-A- 102 510 619
CN-B- 104 582 135    CN-U- 206 564 715
CN-U- 208 768 318

**Description**

TECHNICAL FIELD

The present invention relates to an LED quick activation system, and more particularly, to an LED quick activation system capable of rapidly charging its filter capacitor and being substantially free from feedback voltage detection.

BACKGROUND

As technology develops and white LED (Light Emitting Diode) comes out with a breakthrough, LEDs have been applied on various types of household appliances. On top of that, since LEDs' high efficiency in illumination, they are replacing conventional incandescent lamps and fluorescent lamps in the market.

For improving a conventional LED unit's illuminating stability, the conventional LED unit is mounted with a capacitor that has a large capacitance at its driving circuit's output stage. Therefore, while under a low luminance (i.e., a low-amplitude current), the conventional LED's driving circuit will take too long a period to illuminate itself because of its capacitor's large capacitance. And it is highly likely to mislead its user that said conventional LED unit is malfunctioning. As a matter of fact, the conventional LED unit's operational voltage characteristics are the actual factor of the long activation period. Specifically, before the capacitor charges itself for successfully activating the conventional LED unit, the conventional LED unit has been overpowered but its operational voltage still stays within its cutoff zone, such that said conventional LED unit cannot rapidly activate itself under such a condition.

CN-A-102510619 discloses a quick start-up device of an LED (light-emitting diode) driving power supply. The quick start-up device comprises a bias circuit, a power supply circuit and a control unit, wherein the bias circuit comprises a starting resistor and a driving capacitor, and provides a grid bias voltage for a power switch tube of the power supply circuit; the power supply circuit comprises the power switch tube, a switch device and a power supply capacitor, and the power supply capacitor provides a working current and a working voltage for the control unit; and during the starting process of the control unit, the switch device is started up, thus current passes through the power switch tube and the switch device, and the power supply capacitor is charged quickly, thus the quick start-up of the LED driving power supply is realized.

SUMMARY

The present invention is defined in the appended claims and is directed to a light-emitting diode (LED) quick activation system, the LED quick activation system includes: a driving circuit which is configured to generate an output driving voltage and a driving current using a received power; a loading module which is electrically coupled to the driving circuit, and configured to illuminate its LED unit using the output driving voltage and the driving current; a filter capacitor which is electrically coupled to the loading module in parallel, and is configured to charge its cross voltage using the output driving voltage or discharge its cross voltage to ground; a current control switch which is electrically coupled to the driving circuit configured for receiving the driving current, and is configured to control input power to the loading module and the filter capacitor; a quick discharging module which is electrically coupled to the loading module and the filter capacitor in parallel, and is configured to discharge the filter capacitor to the ground; and characterized in that, the LED quick activation system further includes a primary controller electrically coupled to the driving circuit, the current control switch and the quick discharging module, wherein the primary controller is configured to: store a discharging parameter calculated during a period that the quick discharging module discharges the filter capacitor, calculate an equivalent charging time period for charging the filter capacitor's cross voltage to a target charging voltage using the discharging parameter, control the current control switch to charge the filter capacitor and the loading module using the driving current of a charging amplitude during the equivalent charging period, and charge the filter capacitor and the loading module using the driving current of a regular amplitude after the equivalent charging period passes; wherein the equivalent charging period is a sum of a discharging period (T_Ron) and a charging period (T_Roff) of the filter capacitor, and wherein the target charging voltage refers to a lower-bound voltage that charges the filter capacitor to the extent that the loading module normally operates in a significantly short period; wherein the quick discharging module includes: a first controller which is electrically coupled to the driving circuit for receiving the output driving voltage; a second controller which is electrically coupled to the filter capacitor's output terminal configured for detecting the filter capacitor's cross voltage; a logic gate, which is respectively and electrically coupled to the first controller and the second controller, configured for receiving respective output control signals; a counter, electrically coupled in between the first controller and the logic gate; and a discharging unit which is electrically coupled to the loading module in parallel; wherein the first controller is further configured to compare the output driving voltage with the target charging voltage; wherein when the output driving voltage of the driving circuit is higher than the target charging voltage, the first controller is further configured to output a high-level voltage to the counter, and the counter is further configured to in turn keep on resetting the counter's count and output a first logic parameter that corresponds to the high-level voltage to the logic gate's first input terminal; wherein the second controller is further configured to sense the filter capacitor's cross voltage that exceeds the target charging voltage, and correspondingly generate a second logic parameter that corresponds to the filter capacitor's cross voltage to the logic gate's second input terminal; and wherein the logic gate is further configured to perform a logic calculation on both the first logic parameter and the second logic parameter to keep the discharging unit open-circuit, such that the output driving voltage keeps on charging the filter capacitor and the loading module; wherein the first controller is further configured to compare the output driving voltage with the target charging voltage; wherein when the output driving voltage of the driving circuit is lower than the target charging voltage, the first controller is further configured to output a low-level voltage to the counter; wherein the counter is further configured to in turn accumulate its count as a clock, and is further configured to output a third logic parameter to the logic gate's first input terminal; wherein during the counter's count accumulation the filter capacitor begins discharging its cross voltage, such that the second controller still senses the filter capacitor's cross voltage and correspondingly generates the second logic parameter; wherein the logic gate is further configured to perform a logic calculation on both the third logic parameter and the second logic parameter, and to in turn activate the discharging unit and wherein when the discharging unit is activated, the discharging unit discharges the filter capacitor to a ground level, and the primary controller is further configured to store the counter's final count as the discharging parameter; wherein the current control switch includes a constant resistor and a corresponding transistor; wherein the primary controller is further configured to calculate the target charging voltage as: $V\_target = V\_C \times X$; wherein $V\_target$ represents the target charging voltage, $V\_C$ represents the loading module's LED barrier voltage, and X represents a charging end ratio; wherein the primary controller is further configured to calculate the discharging period of the filter capacitor as: $T\_Ron = S\_th/F\_sw = M$; wherein $T\_Ron$ and M represent the discharging period, $S\_th$ represents the counter's final count, and $F\_sw$ represents a power transformation switch frequency; wherein the primary controller is further configured to calculate a charging voltage that the filter capacitor (CF)'s cross voltage reaches during the same period as the discharging period as: $V\_(C, TRon) = (I\_in \times M/C)/(1 + M/RC)$; wherein $V\_(C, TRon)$ represents the charging voltage, M represents the discharging period, $I\_in$ represents the driving current from the driving circuit, C represents the filter capacitor's capacitance, and R represents the constant resistor's resistance; wherein the primary controller is further configured to calculate a charging period, during which the charging voltage takes to charge till reaching the target charging voltage, as: $T\_Roff = (V\_target - V\_(C, TRon)) \times I\_in/C$; wherein $T\_Roff i$ represents the charging period, $V\_(C, TRon)$ represents the charging voltage, $V\_target$ represents the target charging voltage, $I\_in$ represents the driving current from the driving circuit, and C represents the filter capacitor's capacitance.

In one example, the primary controller is implemented using at least one or a combination of a CPU, a programmable unit microprocessor for general use or specific use, a digital signal processor, and an application specific integrated circuit.

In one example, the primary controller further includes a storage unit for permanently or quasi-permanently storing information that includes a lookup table or multiple sets of operating parameters or pre-storing operating parameters.

BRIEF DESCRIPTION OF THE DRAWINGS

FIG. 1 illustrates a schematic diagram of a LED quick activation system according to one embodiment.
FIG. 2 illustrates a detailed diagram of how FIG. 1's LED quick activation system's quick discharging module interacts with the LED quick activation system's driving circuit, filter capacitor and loading module according to one example.
FIG. 3 and FIG. 4 illustrate equivalent circuit diagrams of how FIG. 1's LED quick activation system's controller determines a discharging parameter.
FIG. 5 illustrates a flowchart of a quick activation method that the LED quick activation system shown in FIG. 1 applies according to one embodiment.

DETAILED DESCRIPTION OF THE EMBODIMENTS

As mentioned above, the present disclosure discloses a LED quick activating system for substantially neutralizing the conventional LED unit's defect in its capacitor's long charge period. Specifically, the disclosed LED quick activating system is capable of rapidly charging its filter capacitor under a low luminance/a low-amplitude current. Moreover, the disclosed LED quick activation system is substantially free of voltage detection. Therefore, the disclosed LED quick activation system has lower standby power consumption and a simpler circuitry.

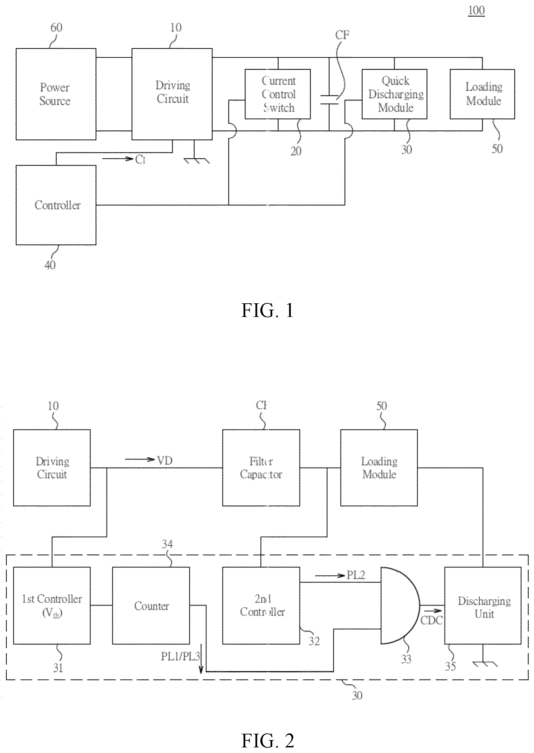

FIG. 1 illustrates a schematic diagram of a LED quick activation system 100 according to one embodiment. In some examples, the LED quick activation system 100 is equipped on a LED device for rapidly driving the LED device to its qualified operational voltage from a standby or cold-start status, i.e., in an extremely short of period.

The LED quick activation system 100 includes a driving circuit 10, a current control switch 20, a quick discharging module 30, a controller 40, a loading module 50, a power source 60 and a filter capacitor CF.

The driving circuit 10 is electrically coupled to the power source 60 for receiving power. Also, the driving circuit is electrically coupled to the loading module 50 and the filter capacitor CF in parallel for driving the loading module 50 using a driving current and for charging the filter capacitor CF. In some examples, the power source 60 provides a direct-current (DC) voltage or an alternative-current (AC) voltage. In addition, in some examples, the driving circuit 10 includes at least one or a combination of a transformer, a rectifier, a filter, and other circuits or devices having similar functions.

The current control switch 20 is electrically coupled to the driving circuit 10 for receiving its driving current. Second, the current control switch 20 is electrically coupled to the controller 40 for receiving a current control signal CI that renders the current control switch 20 to switch on or switch off. Third, the current control switch 20 is electrically coupled to the loading module 50 and the filter capacitor CF in parallel for controlling their input power. Specifically, the current control switch 20 uses pulse-width modulation (PWM) for modulating an input period (or an input frequency) and in turn determines the output power for the loading module 50 and the filter capacitor CF.

The quick discharging module 30 is electrically coupled to the loading module 50 and the filter capacitor CF in parallel. Also, the quick discharging module 30 rapidly switches the loading module 50 to ground. And the quick discharging module 30 linearly discharges the filter capacitor with the aid of a constant-current false-loading design, such that the filter capacitor CF's discharging period is significantly reduced. The quick discharging module 30's technical details will be introduced later.

The controller 40 is electrically coupled to the driving circuit 10, the current control switch 20 and the quick discharging module 30 for controlling these elements' respective operations. In some examples, the controller 40 is implemented using at least one or a combination of a CPU (Central Processing Unit), a programmable unit microprocessor that is for general use or specific use, a DSP (Digital Signal Processor), and an ASIC (Application Specific Integrated Circuit). In some examples, the controller 40 may be equipped with a storage unit or be combined with the storage unit to form a SoC (System-on-Chip), such that the controller 40 is capable of permanently or quasi-permanently storing information, which may include a lookup table or multiple sets of operating parameters. And in turn the controller 40 can pre-store required operating parameters for future access or use.

Primarily, the controller 40 records discharging parameters generated during a discharging period that the quick discharging module 30 discharges the filter capacitor CF last time. In this way, the controller 40 determines an equivalent charging time period for the loading module 50's operational voltage parameters. In addition, based on the determined equivalent charging time period, the controller 40 transmits the current control signal CI to the current control switch 20 for switching the input power to the loading module 50 and the filter capacitor CF. During the equivalent charging time period (i.e., under a first mode), the controller 40 transmits the current control signal CI to the current control switch 20 for outputting a high-power charging current to charge the filter capacitor CF. After the equivalent charging time period passes (i.e., under a second mode), the controller 40 immediately transmits another current control signal CI to the current control switch 20 for switching its output current to a regular charging current that then charges the loading module 50 and the filter capacitor CF.

FIG. 2 illustrates a detailed diagram of how the quick discharging module 30 interacts with the driving circuit 10, the filter capacitor CF and the loading module 50 according to one example. The quick discharging module 30 includes a first controller 31, a second controller 32, a logic gate 33, a counter 34 and a discharging unit 35.

The first controller 31 is electrically coupled to the driving circuit 10 for receiving its output driving voltage VD. The second controller 32 is electrically coupled to the filter capacitor CF's output terminal for detecting the filter capacitor CF's cross voltage. The logic gate 33 is respectively and electrically coupled to the first controller 31 and the second controller 32 for receiving respective output control signals. The counter 34 is electrically coupled in between the first controller 31 and the logic gate 33. The discharging unit 35 is electrically coupled to the loading module 50 in parallel.

In some examples, the first controller 31 and the second controller 32 are implemented as respectively independent SoC chips or both integrated with the controller 40 as a SoC chip. Besides, in some examples, the logic gate 33 is implemented using an AND gate, an OR gate, a NAND gate, or a NOR gate. In some other examples, the logic gate 33's circuitry is altered to various embodiments, for example, by increasing a number of used logic gates and/or inverters, or by modifying its counter's triggering condition.

After the driving circuit 10 is activated, the first controller 31 compares the driving circuit 10's output voltage VD with a built-in predetermined voltage Vth, which indicates a lower-bound voltage that can charge the filter capacitor CF to the extent that the loading module 50 can normally operate in a significantly short period. When the output voltage VD is higher than the predetermined voltage Vth in voltage level, the first controller 31 outputs a high-level voltage, which is generated by applying a built-in Schmitt trigger's voltage swing, to the counter 34. Upon receiving the high-level voltage, the counter 34 keeps on resetting its count and outputs a first logic parameter PL1 to the logic gate 33's first input terminal. At this time, the second controller 32 senses the filter capacitor CF's high cross voltage, which is charged by via the output voltage VD, and in response outputs a second logic parameter PL2 to the logic gate 33's second input terminal. And the logic gate 33 performs logic calculation on both the received first logic parameter PL1 and the received second logic parameter PL2 to generate a control signal CDC to keep the discharging unit 35 open-circuit. At this time, the driving circuit 10's output voltage VD keeps on charging the filter capacitor CF and the loading module 50.

Upon the moment when the driving circuit 10 is switched off such that its output voltage VD's voltage level significantly drops below the predetermined voltage Vth, the first controller 31 compares the driving circuit 10's output voltage VD with the predetermined voltage Vth. At this time, the output voltage VD's voltage level is lower than the predetermined voltage Vth's voltage level, such that the first controller 31 outputs a low-level voltage, which is generated by the built-in Schmitt trigger's voltage swing, to the counter 34. At this time, the counter 34's return pin's voltage level is changed from high to low, so the counter 34 starts accumulating its count as a clock. When the counter 34's count exceeds a predetermined upper count, the counter 34 outputs a third logic parameter PL3 to the logic gate 33's first input terminal. At the same time, since the filter capacitor CF hasn't begun discharging itself during the counter 34's counting, the second controller 32 still senses the filter capacitor CF's high cross voltage and keeps on outputting the second logic parameter PL2. Therefore, the logic gate 33 currently receives the third logic parameter PL3 from the counter 34 (i.e., the first controller 31) and the second logic parameter PL2 from the second controller 32. And in turn, the logic gate 33 outputs the control signal CDC to activate (i.e., close-circuit) the discharging unit 35, such that the discharging unit 35 rapidly discharges the filter capacitor CF to a low level (e.g., the ground level).

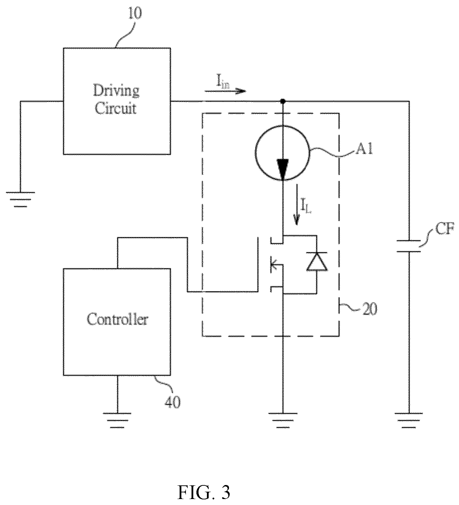

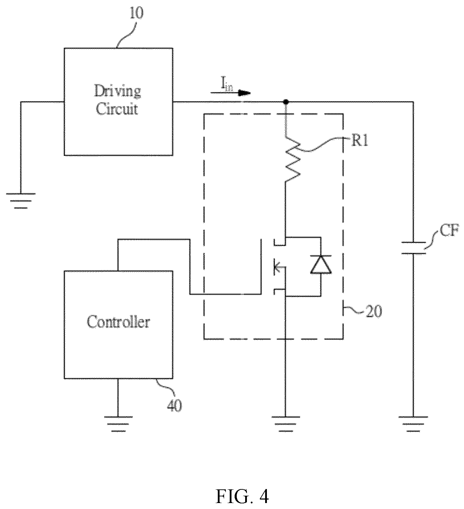

At the end of discharging the filter capacitor CF, the counter 34's final count is stored as a discharging parameter by the controller 40. Additionally, the controller 40 is capable of estimating the filter capacitor CF's required charging time period based on the stored discharging parameter without referring to a feedback voltage. The present disclosure discloses two examples of ow the discharging parameter is determined in FIG. 3 and FIG. 4 in a form of equivalent circuit diagram.

As shown in FIG. 3, the current control switch 20 includes a constant current source A1 and an equivalent transistor. After an initial discharging, the controller 40 confirms a discharging parameter $S\_th/F\_sw$, where $S\_th$ indicates the counter 34's final count, and $F\_sw$ indicates a power transformation switch frequency. With the aid of circuitry setting, the following parameters are known: $V\_C$ indicates a LED's barrier voltage (from the loading module 50), $X$ indicates a charging end ratio, $I\_in$ indicates a charging current or the driving current from the driving circuit 10, $I\_L$ indicates the constant current source A1's constant current, and $C$ indicates the filter capacitor CF's capacitance.

At initial, a designated target charging voltage $V\_target$, using which the filter capacitor CF's cross voltage reaches at least (i.e., lower-bound) for successfully driving the loading module 50, has to be determined. The controller 40 calculates a target charging voltage $V\_target$ as:

$$V\_target = V\_C \times X \qquad (1);$$

Second, the controller 40 calculates the discharging parameter $S\_th/F\_sw$ and define said discharging parameter $S\_th/F\_sw$ as a required discharging period $T\_Ron$, during which the filter capacitor CF discharges to the LED's barrier voltage $V\_C$. The controller 40 calculates the discharging period $T\_Ron$ as:

$$T\_Ron = S\_th/F\_sw = M \quad (2);$$

It is noted that the discharging period $T\_Ron$ can be replaced by other characteristic parameters in other examples.

Third, the controller 40 calculates a charging voltage $V\_(C, TRon)$ that the filter capacitor CF's cross voltage can reach during the same period as the discharging period $T\_Ron$ as:

$$V\_(C, TRon) = (M) \times I\_in/C \qquad (3);$$

Fourth, the controller 40 calculates a charging time period $T\_Roff$, during which the charging voltage $V\_(C, TRon)$ takes to charge till reaching the target charging voltage $V\_target$, as:

$$T\_Roff = (V\_target - V\_(C, TRon)) \times I\_in/C \qquad (4);$$

Last, the controller 40 calculates an equivalent charging time period $T$, during which the filter capacitor CF requires to charge, as a sum of the discharging period $T\_Ron$ and the charging time period $T\_Roff$, i.e., as:

$$T = T\_Ron + T\_Roff = M + [(V\_C \times X) - (M \times I\_in/C) \times I\_in/C] \qquad (5).$$

In another example, as shown in FIG. 4, the current control switch 20 includes a constant resistor R1 and an equivalent transistor. After an initial discharging, the controller 40 confirms the discharging parameter $S\_th/F\_sw$, where S_th and F_sw shares same definitions as abovementioned. Similarly, with the aid of circuitry setting, the following parameters are also known: V_C indicates the LED's barrier voltage (from the loading module 50), X indicates the charging end ratio, I_in indicates the charging current, I_L indicates the constant current source A1's constant current, C indicates the filter capacitor CF's capacitance, and R indicates the constant resistor R1's resistance.

At initial, the designated target charging voltage V_target, which the filter capacitor CF's cross voltage at least (i.e., lower-bound) reaches for successfully driving the loading module 50, has to be determined. The controller 40 calculates the target charging voltage V_target as:

$$V\_target = V\_C \times X \qquad (6);$$

Second, the controller 40 calculates the discharging parameter S_th/F_sw and define said discharging parameter S_th/F_sw as the required discharging period T_Ron, during which the filter capacitor CF discharges to the LED's barrier voltage V_C. The controller 40 calculates the discharging period T_Ron as:

$$T\_Ron = S\_th/F\_sw = M \quad (7);$$

It is noted that the discharging period T_Ron can be replaced by other characteristic parameters in other examples.

Third, the controller 40 calculates a charging voltage V_(C, TRon) that the filter capacitor CF's cross voltage can reach during the same period as the discharging period T_Ron as:

$$V\_(C, TRon) = (I\_in \times M/C)/(1+M/RC) \quad (8);$$

Fourth, the controller 40 calculates the charging time period T_Roff, during which the charging voltage V_(C, TRon) takes to charge till reaching the target charging voltage V_target, as:

$$T\_Roff = (V\_target - V\_(C, TRon)) \times I\_in/C \qquad (9);$$

Last, the controller 40 calculates an equivalent charging time period T, during which the filter capacitor CF requires to charge, as a sum of the discharging period T_Ron and the charging time period T_Roff, i.e., as:

$$T = T\_Ron + T\_Roff = M + [(V\_C \times X) - ((I\_in \times M/C)/(1+M/RC)) \times I\_in/C] \quad (10).$$

With the aid of the first example (i.e., formulas (1)-(5)) and the second example (i.e., formulas (6)-(10)), the controller 40 is capable of calculating the filter capacitor CF's required charging time period T. Based on the charging time period T, the controller 40 can operate under two different charging modes. Under a first mode that corresponds to the equivalent charging time period T, the driving circuit 10 that is under the controller 40's control charges the filter capacitor CF with a high-power charging current. And under a second mode that after the equivalent charging time period T passes, the driving circuit 10 that is under the controller 40's control switches to a regular charging current for charging the loading module 50 and the filter capacitor CF, such that the controller 40 is able to immediately activate the loading module 50, specifically, its LED units.

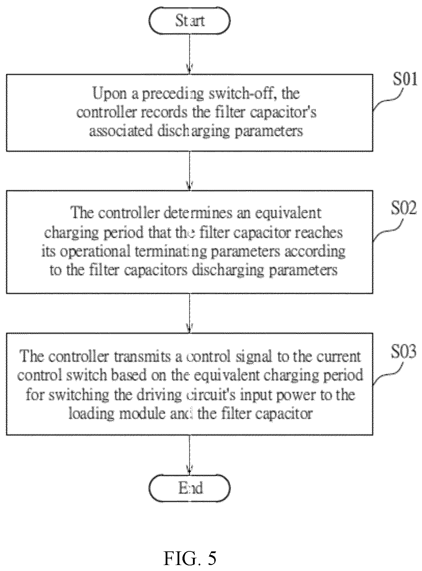

FIG. 5 illustrates a flowchart of a quick activation method that the LED quick activation system 100 applies according to one embodiment. In some examples, the disclosed quick activation method in a form of software or firmware is installed in a processor for execution. The disclosed quick activation method may also be implemented using multiple chips and their circuitry.

In Step S01, during a preceding switch-off of the LED quick activation system 100, the controller records a discharging parameter, which may be the filter capacitor CF's discharging period, the counter 34's count, or other parameters that are positively associated with the filter capacitor CF's discharging period.

In Step S02, the controller 40 determines the equivalent charging time period T according to the filter capacitor CF's discharging parameter. During the equivalent charging time period T, the controller 40's calculation may vary corresponding to different types of circuitry.

In Step S03, the controller 40 transmits the control signal CI to the current control switch 20 for switching the driving circuit 10's input power to the loading module 50 and the filter capacitor CF. Specifically, the controller 40 switches between the abovementioned first and second modes. During the first mode, i.e., during the equivalent charging time period T, the controller 40 relays the current control signal CI of a first level to the current control switch 20 for outputting a high-power charging current (i.e., of a charging amplitude) to charge the filter capacitor CF. During the second mode, i.e.,

after the equivalent charging time period T passes, the controller 40 relays the current control signal CI of a second level to the current control switch 20 for switching to output a regular-power current (i.e., of a regular amplitude) for charging the loading module 50 and the filter capacitor CF. Based on the switching between the first mode and the second mode, the LED quick activation system 100 is capable of charging the filter capacitor CF's cross voltage to the extent that the loading module 50 can normally operate (i.e., the loading module 50's LED units to normally illuminate) in a significantly short period, such that the LED quick activation system 100 can perform its quick-start function.

In conclusion, the disclosed LED activation system 100 can rapidly charge its filter capacitor CF upon the driving circuit 10 switches from an OFF state to an ON state. In this way, even though the disclosed LED activation system 100 receives a low-amplitude current, it still activates the loading module 50's LED units in a significantly short period. On top of that, the disclosed LED activation system 100 is substantially free from detecting a feedback voltage for required control. Therefore, the disclosed LED activation system 100 has the following advantages: (1) the controller 40's less pins; (2) no voltage-dividing resistor is required; (3) no regular power consumption caused by detecting the feedback voltage occurs; (4) lower standby power consumption (because of substantially free from feedback voltage detection); and (5) the disclosed LED activation system 100's simpler circuitry.

**Claims**

1.   An LED quick activation system (100), comprising:

a driving circuit (10) which is configured to generate an output driving voltage (VD) and a driving current using a received power;
a loading module (50) which is electrically coupled to the driving circuit (10), and configured to illuminate its LED unit using the output driving voltage and the driving current;
a filter capacitor (CF) which is electrically coupled to the loading module (50) in parallel, and is configured to charge its cross voltage using the output driving voltage or discharge its cross voltage to ground;
a current control switch (20) which is electrically coupled to the driving circuit (10) configured for receiving the driving current, and is configured to control input power to the loading module (50) and the filter capacitor (CF);
a quick discharging module (30) which is electrically coupled to the loading module (50) and the filter capacitor (CF) in parallel, and is configured to discharge the filter capacitor (CF) to the ground; and
**characterized in that**, the LED quick activation system (100) further comprises a primary controller (40) electrically coupled to the driving circuit (10), the current control switch (20) and the quick discharging module (30),
wherein the primary controller (40) is configured to:

store a discharging parameter calculated during a period that the quick discharging module (30) discharges the filter capacitor (CF),
calculate an equivalent charging time period (T) for charging the filter capacitor (CF)'s cross voltage to a target charging voltage using the discharging parameter,
control the current control switch (20) to
charge the filter capacitor (CF) and the loading module (50) using the driving current of a charging amplitude during the equivalent charging period, and
charge the filter capacitor (CF) and the loading module (50) using the driving current of a regular amplitude after the equivalent charging period passes;
wherein the equivalent charging period is a sum of a discharging period (T_Ron) and a charging period (T_Roff) of the filter capacitor (CF), and
wherein the target charging voltage refers to a lower-bound voltage that charges the filter capacitor (CF) to the extent that the loading module (50) normally operates in a significantly short period;
wherein the quick discharging module (30) comprises:

a first controller (31) which is electrically coupled to the driving circuit (10) for receiving the output driving voltage;
a second controller (32) which is electrically coupled to the filter capacitor (CF)'s output terminal configured for detecting the filter capacitor (CF)'s cross voltage;
a logic gate (33), which is respectively and electrically coupled to the first controller and the second controller, configured for receiving respective output control signals;
a counter (34), electrically coupled in between the first controller (31) and the logic gate; and
a discharging unit (35) which is electrically coupled to the loading module (50) in parallel;

wherein the first controller (31) is further configured to compare the output driving voltage with the target charging voltage;

wherein when the output driving voltage (VD) of the driving circuit (10) is higher than the target charging voltage, the first controller (31) is further configured to output a high-level voltage to the counter (34), and the counter (34) is further configured to in turn keep on resetting the counter (34)'s count and output a first logic parameter (PL1) that corresponds to the high-level voltage to the logic gate's first input terminal;

wherein the second controller (32) is further configured to sense the filter capacitor (CF)'s cross voltage that exceeds the target charging voltage, and correspondingly generate a second logic parameter (PL2) that corresponds to the filter capacitor (CF)'s cross voltage to the logic gate's second input terminal; and

wherein the logic gate is further configured to perform a logic calculation on both the first logic parameter and the second logic parameter to keep the discharging unit (35) open-circuit, such that the output driving voltage keeps on charging the filter capacitor (CF) and the loading module (50);

wherein the first controller (31) is further configured to compare the output driving voltage with the target charging voltage;

wherein when the output driving voltage (VD) of the driving circuit (10) is lower than the target charging voltage, the first controller (31) is further configured to output a low-level voltage to the counter (34);

wherein the counter (34) is further configured to in turn accumulate its count as a clock, and is further configured to output a third logic parameter (PL3) to the logic gate's first input terminal;

wherein during the counter's count accumulation the filter capacitor (CF) begins discharging its cross voltage, such that the second controller (32) still senses the filter capacitor (CF)'s cross voltage and correspondingly generates the second logic parameter (PL2);

wherein the logic gate is further configured to perform a logic calculation on both the third logic parameter and the second logic parameter, and to in turn activate the discharging unit (35); and

wherein when the discharging unit (35) is activated;

the discharging unit (35) discharges the filter capacitor (CF) to a ground level, and the primary controller (40) is further configured to store the counter (34)'s final count as the discharging parameter;

wherein the current control switch (20) comprises a constant resistor (R1) and a corresponding transistor;

wherein the primary controller (40) is further configured to calculate the target charging voltage as:

$$V\_target = V\_C \times X;$$

wherein V_target represents the target charging voltage, V_C represents the loading module (50)'s LED barrier voltage, and X represents a charging end ratio;

wherein the primary controller (40) is further configured to calculate the discharging period of the filter capacitor (CF) as:

$$T\_Ron = S\_th / F\_sw = M;$$

wherein T_Ron and M represent the discharging period, S_th represents the counter (34)'s final count, and F_sw represents a power transformation switch frequency;

wherein the primary controller (40) is further configured to calculate a charging voltage that the filter capacitor (CF)'s cross voltage reaches during the same period as the discharging period as:

$$V\_(C, TRon) = (I\_in \times M/C)/(1 + M/RC);$$

wherein V_(C, TRon) represents the charging voltage, M represents the discharging period, I_in represents the driving current from the driving circuit (10), C represents the filter capacitor (CF)'s capacitance, and R represents the constant resistor's resistance;

wherein the primary controller (40) is further configured to calculate a charging period, during which the charging voltage takes to charge till reaching the target charging voltage, as:

$$T\_Roff = (V\_target - V\_(C, TRon)) \times I\_in/C;$$

wherein T_Roff i represents the charging period, V_(C, TRon) represents the charging voltage, V_target represents the target charging voltage, I_in represents the driving current from the driving circuit (10), and C represents the filter capacitor (CF)'s capacitance.

2. The LED quick activation system (100) of claim 1, **characterized in that**, the primary controller (40) is further configured to calculate the equivalent charging period as:

$$T=T\_Ron+T\_Roff=M+[(V\_C\times X)-((I\_in\times M/C)/(1+M/RC))\times I\_in/C];$$

wherein T represents the equivalent charging period, T_Ron and M represent the discharging period, T_Roff represents the charging period, V_C represents the loading module (50)'s LED barrier voltage, X represents a charging end ratio, I_in represents the driving current from the driving circuit (10), C represents the filter capacitor (CF)'s capacitance, and R represents the constant resistor's resistance.

3. The LED quick activation system (100) of claim 1, **characterized in that**, the primary controller (40) is implemented using at least one or a combination of a CPU, a programmable unit microprocessor for general use or specific use, a digital signal processor, and an application specific integrated circuit.

**Patentansprüche**

1. LED-Schnellaktivierungssystem (100), umfassend:

eine Antriebsschaltung (10), die dafür ausgelegt ist, eine Ausgangsantriebsspannung (VD) und einen Antriebsstrom unter Verwendung einer empfangenen Leistung zu erzeugen;
ein Lademodul (50), das mit der Antriebsschaltung (10) elektrisch gekoppelt ist, und dafür ausgelegt ist, seine LED-Einheit unter Verwendung der Ausgangsantriebsspannung und des Antriebsstroms zu beleuchten;
einen Filterkondensator (CF), der mit dem Lademodul (50) parallel elektrisch gekoppelt ist, und dafür ausgelegt ist, seine Querspannung unter Verwendung der Ausgangsantriebsspannung aufzuladen oder seine Querspannung auf Erde zu entladen;
einen Stromsteuerungsschalter (20), der mit der Antriebsschaltung (10) elektrisch gekoppelt ist, der dafür ausgelegt ist, die Antriebsspannung zu empfangen, und dafür ausgelegt ist, Eingangsleistung zum Lademodul (50) und zum Filterkondensator (CF) zu steuern;
ein Schnellentlademodul (30), das mit dem Lademodul (50) und dem Filterkondensator (CF) parallel elektrisch gekoppelt ist, und dafür ausgelegt ist, den Filterkondensator (CF) auf Erde zu entladen; und
**dadurch gekennzeichnet, dass** das LED-Schnellaktivierungssystem (100) ferner ein primäres Steuergerät (40) umfasst, das mit der Antriebsschaltung (10), dem Stromsteuerungsschalter (20) und dem Schnellentlademodul (30) elektrisch gekoppelt ist,
worin das primäre Steuergerät (40) dafür ausgelegt ist:

einen Entladeparameter zu speichern, der während eines Zeitraums berechnet wird, in dem das Schnellentlademodul (30) den Filterkondensator (CF) entlädt,
einen äquivalenten Ladezeitraum (T) zu berechnen, um die Querspannung des Filterkondensators (CF) auf eine Zielladespannung unter Verwendung des Entladeparameters aufzuladen,
den Stromsteuerungsschalter (20) zu steuern, um
den Filterkondensator (CF) und das Lademodul (50) unter Verwendung des Antriebsstroms einer Ladeamplitude während des äquivalenten Ladezeitraums zu laden, und
den Filterkondensator (CF) und das Lademodul (50) unter Verwendung des Antriebsstroms einer regulären Amplitude aufzuladen, nachdem der äquivalente Ladezeitraum vergeht;
worin der äquivalente Ladezeitraum eine Summe eines Entladezeitraums (T_Ron) und eines Ladezeitraums (T_Roff) des Filterkondensators (CF) ist, und
worin die Zielladespannung sich auf eine Spannungsuntergrenze bezieht, die den Filterkondensator (CF) in dem Ausmaß auflädt, dass das Lademodul (50) üblicherweise in einem bedeutenderweise kurzen Zeitraum arbeitet;
worin das Schnellentlademodul (30) umfasst:

ein erstes Steuergerät (31), das mit der Antriebsschaltung (10) elektrisch gekoppelt ist, um die Ausgangsantriebsspannung zu empfangen;
ein zweites Steuergerät (32), das mit dem Ausgangsanschluss des Filterkondensators (CF) elektrisch gekoppelt ist, der dafür ausgelegt ist, die Querspannung des Filterkondensators (CF) zu detektieren; ein Logikgatter (33), das jeweils mit dem ersten Steuergerät und dem zweiten Steuergerät elektrisch gekoppelt ist, das dafür ausgelegt ist, jeweilige Ausgangssteuersignale zu empfangen; einen Zähler (34), der zwischen dem ersten Steuergerät (31) und dem Logikgatter elektrisch gekoppelt ist; und

eine Entladeeinheit (35), die parallel mit dem Lademodul (50) elektrisch gekoppelt ist;

worin das erste Steuergerät (31) ferner dafür ausgelegt ist, die Ausgangsantriebsspannung mit der Zielladespannung zu vergleichen;

worin, wenn die Ausgangsantriebsspannung (VD) der Antriebsschaltung (10) höher ist als die Zielladespannung, das erste Steuergerät (31) ferner dafür ausgelegt ist, dem Zähler (34) eine Hochniveauspannung auszugeben, und der Zähler (34) ferner dafür ausgelegt ist, wiederum die Zählung des Zählers (34) weiter zurückzusetzen und dem ersten Eingangsanschluss des Logikgatters einen ersten Logik-Parameter (PL1) auszugeben, der der Hochniveauspannung entspricht;

worin das zweite Steuergerät (32) ferner dafür ausgelegt ist, die Querspannung des Filterkondensators (CF) zu fühlen, die die Zielladespannung überschreitet, und dementsprechend einen zweiten Logik-Parameter (PL2), der der Querspannung des Filterkondensators (CF) entspricht, dem zweiten Eingangsanschluss des Logikgatters zu erzeugen; und

worin das Logikgatter ferner dafür ausgelegt ist, eine logische Berechnung sowohl am ersten Logik-Parameter als auch am zweiten Logik-Parameter durchzuführen, um den offenen Stromkreis der Entladeeinheit (35) zu halten, so dass die Ausgangsantriebsspannung den Filterkondensator (CF) und das Lademodul (50) weiter auflädt;

worin das erste Steuergerät (31) ferner dafür ausgelegt ist, die Ausgangsantriebsspannung mit der Zielladespannung zu vergleichen;

worin, wenn die Ausgangsantriebsspannung (VD) der Antriebsschaltung (10) niedriger ist als die Zielladespannung, das erste Steuergerät (31) ferner dafür ausgelegt ist, dem Zähler (34) eine Niedrigniveauspannung auszugeben;

worin der Zähler (34) ferner dafür ausgelegt ist, wiederum seine Zählung als Taktgeber anzuhäufen, und ferner dafür ausgelegt ist, dem ersten Eingangsanschluss des Logikgatters einen dritten Logik-Parameter (PL3) auszugeben;

worin während der Zählungsanhäufung des Zählers der Filterkondensator (CF) beginnt, seine Querspannung zu entladen, so dass das zweite Steuergerät (32) die Querspannung des Filterkondensators (CF) noch fühlt, und dementsprechend den zweiten Logik-Parameter (PL2) erzeugt;

worin das Logikgatter ferner dafür ausgelegt ist, eine logische Berechnung sowohl am dritten Logik-Parameter als auch am zweiten Logik-Parameter durchzuführen, und wiederum die Entladeeinheit (35) zu aktivieren; und

worin, wenn die Entladeeinheit (35) aktiviert ist;

die Entladeeinheit (35) den Filterkondensator (CF) auf Erdniveau entlädt, und das primäre Steuergerät (40) ferner dafür ausgelegt ist, die endgültige Zählung des Zählers (34) als Entladeparameter zu speichern;

worin der Stromsteuerungsschalter (20) einen konstanten Widerstand (R1) und einen entsprechenden Transistor umfasst;

worin das primäre Steuergerät (40) ferner dafür ausgelegt ist, die Zielladespannung als:

$$V\_target = V\_C \times X$$

zu berechnen;

worin V_target die Zielladespannung darstellt, V_C die LED-Barrierenspannung des Lademoduls (50) darstellt, und X ein Ladeendverhältnis darstellt;

worin das primäre Steuergerät (40) ferner dafür ausgelegt ist, den Entladezeitraum des Filterkondensators (CF) als:

$$T\_Ron = S\_th/F\_sw = M;$$

zu berechnen;

worin T_Ron und M den Entladezeitraum darstellen, S_th die endgültige Zählung des Zählers (34) darstellt, und F_sw eine Leistungstransformation-Schaltfrequenz darstellt;

worin das primäre Steuergerät (40) ferner dafür ausgelegt ist, eine Ladespannung, die die Querspannung des Filterkondensators (CF) während desselben Zeitraums wie der Entladezeitraum erreicht, als:

$$V\_(C, TRon)=(I\_in \times M/C)/(1+M/RC)$$

zu berechnen;

worin V_(C, TRon) die Ladespannung darstellt, M den Entladezeitraum darstellt, I_in den Antriebsstrom aus der Antriebsschaltung (10) darstellt, C die Kapazität des Filterkondensators (CF) darstellt, und R den konstanten Widerstand des Widerstands darstellt;

worin das primäre Steuergerät (40) ferner dafür ausgelegt ist, einen Ladezeitraum, während dessen die Ladespannung zur Aufladung kommt, bis die Zielladespannung erreicht wird, als:

$$T\_Roff=(V\_target-V\_(C, TRon) ) \times I\_in/C$$

zu berechnen;

worin T_Roff i den Ladezeitraum darstellt, V_(C, TRon) die Ladespannung darstellt, V_target die Zielladespannung darstellt, I_in den Antriebsstrom aus der Antriebsschaltung (10) darstellt, und C die Kapazität des Filterkondensators (CF) darstellt.

2. LED-Schnellaktivierungssystem (100) nach Anspruch 1, **dadurch gekennzeichnet, dass** das primäre Steuergerät (40) ferner dafür ausgelegt ist, den äquivalenten Ladezeitraum als:

$$T=T\_Ron+T\_Roff=M+[(V\_C \times X)-((I\_in \times M/C)/(1+M/RC)) \times I\_in/C]$$

zu berechnen;

worin T den äquivalenten Ladezeitraum darstellt, T_Ron und M den Entladezeitraum darstellen, T_Roff den Ladezeitraum darstellt, V_C die LED-Barrierenspannung des Lademoduls (50) darstellt, X ein Ladeendverhältnis darstellt, I_in den Antriebsstrom aus der Antriebsschaltung (10) darstellt, C die Kapazität des Filterkondensators (CF) darstellt, und R den konstanten Widerstand des Widerstands darstellt.

3. LED-Schnellaktivierungssystem (100) nach Anspruch 1, **dadurch gekennzeichnet, dass** das primäre Steuergerät (40) unter Verwendung von zumindest einer bzw. einem oder einer Kombination von einer CPU, einem programmierbaren Einheitsmikroprozessor für einen allgemeinen Gebrauch oder für einen spezifischen Gebrauch, einem digitalen Signalprozessor und einer anwendungsspezifischen integrierten Schaltung implementiert wird.

**Revendications**

1. Système d'activation rapide de DEL (100), comprenant :

un circuit d'attaque (10) qui est configuré pour générer une tension d'attaque de sortie (VD) et un courant d'attaque en utilisant une puissance reçue ;

un module de chargement (50) qui est couplé électriquement au circuit d'attaque (10), et configuré pour éclairer son unité DEL en utilisant la tension d'attaque de sortie et le courant d'attaque ;

un condensateur de filtrage (CF) qui est couplé électriquement au module de chargement (50) en parallèle, et est configuré pour charger sa tension croisée en utilisant la tension d'attaque de sortie ou décharger sa tension croisée vers la terre ;

un commutateur de contrôle de courant (20) qui est couplé électriquement au circuit d'attaque (10) configuré pour recevoir le courant d'attaque, et est configuré pour contrôler la puissance d'entrée vers le module de chargement (50) et le condensateur de filtrage (CF) ;

un module de décharge rapide (30) qui est couplé électriquement au module de chargement (50) et au condensateur de filtrage (CF) en parallèle, et est configuré pour décharger le condensateur de filtrage (CF) vers la terre ; et

**caractérisé en ce que**, le système d'activation rapide de DEL (100) comprend en outre un contrôleur principal (40) couplé électriquement au circuit d'attaque (10), au commutateur de contrôle de courant (20) et au module de décharge rapide (30),

dans lequel le contrôleur principal (40) est configuré pour :

stocker un paramètre de décharge calculé pendant une période pendant laquelle le module de décharge rapide (30) décharge le condensateur de filtrage (CF),

calculer une période de charge équivalente (T) pour charger la tension croisée du condensateur de filtrage (CF) à une tension de charge cible à l'aide du paramètre de décharge,

contrôler le commutateur de contrôle de courant (20) pour charger le condensateur de filtrage (CF) et le module de chargement (50) en utilisant le courant d'attaque d'une amplitude de charge pendant la période de charge équivalente, et

charger le condensateur de filtrage (CF) et le module de chargement (50) en utilisant le courant d'attaque d'une amplitude régulière après le passage de la période de charge équivalente ;

dans lequel la période de charge équivalente est une somme d'une période de décharge (T_Ron) et d'une période de charge (T_Roff) du condensateur de filtrage (CF), et

dans lequel la tension de charge cible fait référence à une tension de borne inférieure qui charge le condensateur de filtrage (CF) dans la mesure où le module de chargement (50) fonctionne normalement pendant une période significativement courte ;

où le module de décharge rapide (30) comprend :

un premier contrôleur (31) qui est couplé électriquement au circuit d'attaque (10) pour recevoir la tension d'attaque de sortie ;

un second contrôleur (32) qui est couplé électriquement à la borne de sortie du condensateur de filtrage (CF), configuré pour détecter la tension croisée du condensateur de filtrage (CF) ;

une porte logique (33), qui est respectivement et électriquement couplée au premier contrôleur et au second contrôleur, configurée pour recevoir des signaux de contrôle de sortie respectifs ;

un compteur (34), couplé électriquement entre le premier contrôleur (31) et la porte logique ; et

une unité de décharge (35) qui est couplée électriquement au module de chargement (50) en parallèle ;

dans lequel le premier contrôleur (31) est en outre configuré pour comparer la tension d'attaque de sortie à la tension de charge cible ;

dans lequel lorsque la tension d'attaque de sortie (VD) du circuit d'attaque (10) est supérieure à la tension de charge cible, le premier contrôleur (31) est en outre configuré pour délivrer en sortie une tension de haut niveau au compteur (34), et le compteur (34) est en outre configuré pour continuer à réinitialiser le comptage du compteur (34) et délivrer en sortie un premier paramètre logique (PL1) qui correspond à la tension de haut niveau à la première borne d'entrée de la porte logique ;

dans lequel le second contrôleur (32) est en outre configuré pour détecter la tension croisée du condensateur de filtrage (CF) qui dépasse la tension de charge cible, et générer de manière correspondante un deuxième paramètre logique (PL2) qui correspond à la tension croisée du condensateur de filtrage (CF) à la seconde borne d'entrée de la porte logique ; et

dans lequel la porte logique est en outre configurée pour effectuer un calcul logique à la fois sur le premier paramètre logique et le deuxième paramètre logique pour maintenir l'unité de décharge (35) en circuit ouvert, de sorte que la tension d'attaque de sortie continue à charger le condensateur de filtrage (CF) et le module de chargement (50) ;

dans lequel le premier contrôleur (31) est en outre configuré pour comparer la tension d'attaque de sortie à la tension de charge cible ;

dans lequel lorsque la tension d'attaque de sortie (VD) du circuit d'attaque (10) est inférieure à la tension de charge cible, le premier contrôleur (31) est en outre configuré pour délivrer en sortie une tension de bas niveau au compteur (34) ;

dans lequel le compteur (34) est en outre configuré pour accumuler à son tour son comptage en tant qu'horloge, et est en outre configuré pour délivrer en sortie un troisième paramètre logique (PL3) à la première borne d'entrée de la porte logique ;

dans lequel, pendant l'accumulation de comptage du compteur, le condensateur de filtrage (CF) commence à décharger sa tension croisée, de sorte que le second contrôleur (32) détecte toujours la tension croisée du condensateur de filtrage (CF) et génère en conséquence le deuxième paramètre logique (PL2) ;

dans lequel la porte logique est en outre configurée pour effectuer un calcul logique à la fois sur le troisième paramètre logique et le deuxième paramètre logique, et pour activer à son tour l'unité de décharge (35) ; et

dans lequel lorsque l'unité de décharge (35) est activée ;

l'unité de décharge (35) décharge le condensateur de filtrage (CF) à un niveau de terre, et le contrôleur principal (40) est en outre configuré pour stocker le comptage final du compteur (34) en tant que paramètre de décharge ;

dans lequel le commutateur de contrôle de courant (20) comprend une résistance constante (R1) et un transistor correspondant ;

dans lequel le contrôleur principal (40) est en outre configuré pour calculer la tension de charge cible comme suit :

$$V\_Target = V\_C \times X \ ;$$

où V_target représente la tension de charge cible, V_C représente la tension barrière DEL du module de chargement (50), et X représente un rapport de fin de charge ;

dans lequel le contrôleur principal (40) est en outre configuré pour calculer la période de décharge du condensateur de filtrage (CF) comme suit :

$$T\_Ron = S\_th / F\_sw = M \ ;$$

où T_Ron et M représentent la période de décharge, S_th représente le comptage final du compteur (34), et F_sw représente une fréquence de commutation de transformation de puissance ;

dans lequel le contrôleur principal (40) est en outre configuré pour calculer une tension de charge que la tension croisée du condensateur de filtrage (CF) atteint pendant la même période que la période de décharge comme suit :

$$V\_(C, TRon) = (I\_in \times M/C) / (1 + M/RC) \ ;$$

où V_(C, TRon) représente la tension de charge, M représente la période de décharge, I_in représente le courant d'attaque provenant du circuit d'attaque (10), C représente la capacité du condensateur de filtrage (CF), et R représente la résistance de la résistance constante ;

dans lequel le contrôleur principal (40) est en outre configuré pour calculer une période de charge, que la tension de charge prend pour charger jusqu'à atteindre la tension de charge cible, comme suit :

$$T\_Roff = (V\_target - V\_(C, TRon)) \times I\_in/C \ ;$$

où T_Roff représente la période de charge, V_(C, TRon) représente la tension de charge, V_target représente la tension de charge cible, I_in représente le courant d'attaque provenant du circuit d'attaque (10), et C représente la capacité du condensateur de filtrage (CF).

2. Système d'activation rapide de DEL (100) selon la revendication 1, **caractérisé en ce que** le contrôleur principal (40) est en outre configuré pour calculer la période de charge équivalente comme suit :

$$T = T\_Ron + T\_Roff = M + [(V\_C \times X) - ((I\_in \times M/C)/(1 + M/RC)) \times I\_in/C] \ ;$$

où T représente la période de charge équivalente, T_Ron et M représentent la période de décharge, T_Roff représente la période de charge, V_C représente la tension barrière DEL du module de chargement (50), X représente un rapport de fin de charge, I_in représente le courant d'attaque provenant du circuit d'attaque (10), C représente la capacité du condensateur de filtrage (CF) et R représente la résistance de la résistance constante.

3. Système d'activation rapide de DEL (100) selon la revendication 1, **caractérisé en ce que** le contrôleur principal (40) est mis en œuvre en utilisant au moins l'un parmi une CPU, d'un microprocesseur d'unité programmable pour une utilisation générale ou une utilisation spécifique, d'un processeur de signaux numériques et d'un circuit intégré spécifique à une application ou une combinaison de ceux-ci.

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 102510619 A